# EUROPEAN PATENT SPECIFICATION

(11) **EP 0 956 781 B1**
(45) Date of publication and mention of the grant of the patent: **07.08.2002**
(21) Application number: 99103495.0
(22) Date of filing: 23.02.1999
(51) Int. Cl.: A23N 15/00

(54) **Sprouting beans refining apparatus**
Einrichtung zum Waschen von Sojasprossen
Installation pour laver des germes de soja

(30) Priority: 15.05.1998 JP 13332998
(43) Date of publication of application: 17.11.1999
(73) Proprietor: Daisei Machinery Co., Ltd., Tsurugashima-shi, Saitama-ken (JP)
(72) Inventor: Suzuki, Tomosaburo, c/o Daisei Machinery Co., Tsurugashima-shi, Saitama-ken (JP); Tazaki, Ribun, c/o Daisei Machinery Co., Tsurugashima-shi, Saitama-ken (JP)
(74) Representative: Hering, Hartmut, Dipl.-Ing.

(56) References cited:
- CH-A- 338 416
- US-A- 4 289 614
- US-A- 4 385 702
- PATENT ABSTRACTS OF JAPAN vol. 1996, no. 09, 30 September 1996 (1996-09-30) & JP 08 131145 A (TAISEI KIKAI:KK), 28 May 1996 (1996-05-28)

## Description

The present invention relates to an apparatus for refining sprouting beans by removing trashes, hulls, small roots and the like attached to or mixed in harvested sprouting beans according to the preamble of claim 1.

In the harvested sprouting beans, there are contained refuse matters of trashes or hulls of raw material beans, small or slender roots and the like in approximately 10% in weight. In order to remove these refuse matters of the harvested sprouting beans, there has been carried out in the prior art a method wherein the sprouting beans are immersed in a water tank filled with a large amount of water so that the refuse matters of hulls, trashes or the like are settled for removal.

In the prior art method, however, not only the large amount of water is needed but also there is needed a large space for placing a large water tank in a factory. Still larger problems exist such that there occur breaks of the sprouting beans in a washing process as well as the sprouting beans, while in the water, absorb water excessively so that their freshness preservation is aggravated greatly.

An apparatus for refining sprouting beans of the kind referred to in the preamble of claim 1 is known from JP-A-0 8131 145 wherein, while sprouting beans are placed on a perforated endless belt to be conveyed thereon, said endless belt is vibrated so that refuse matters of hulls, trashes and the like are removed of the sprouting beans without water being used. This apparatus has been very effective but it has been still insufficient in some aspect in removing the refuse matters completely of the sprouting beans.

In order to solve the problems in the prior art apparatus, it is an object of the present invention to provide a sprouting beans refining apparatus having a performance to be able to remove refuse matters of sprouting beans cleanly to a satisfactory extent, wherein not only there is used no water tank but also there is occupied a small space only.

In order to attain said object, the present invention provides a sprouting beans refining apparatus as set out in claim 1.

The endless flat belt employed in the present invention is preferably a non-perforated endless flat belt but a perforated belt may be also used. Further, a plurality of vibration frames each having an endless flat belt is arranged such that the endless flat belts are arranged in series in two or more stages in a state of upward and downward directional lamination for obtaining an enhanced refining function and being effective for economy of space.

The sprouting beans refining apparatus according to the present invention is constructed as mentioned above, thereby the sprouting beans supplied onto each endless flat belt are given vibration in the reverse direction of the moving direction of the endless flat belt so as to be sent thereon gradually downwardly along the inclination of the endless flat belt. At this time, due to repetition of springing and progressing on the belt, the sprouting beans may be broken off of their portions of small or slender roots. The roots so broken off or other refuse matters attached to or mixed in the sprouting beans stick to the upper surface of each endless flat belt which is wetted by water on its surface and are transferred upwardly together with movement of each endless flat belt in the reverse direction of the sprouting beans.

The refuse matters attaching to the wetted surface of each endless flat belt and transferred upwardly together with each endless flat belt are scraped off to be discharged by the scraper disposed opposingly to each endless flat belt for removing the attachments to each belt.

The sprouting beans which have come to the lower end of the last endless flat belt are collected as final products

In the apparatus of the present invention the refining operation of the sprouting beans is repeated at each of the endless belts so as to enhance the degree of the refinement.

### BRIEF DESCRIPTION OF THE DRAWINGS:

Fig. 1 is a side view showing construction of a sprouting beans refining apparatus of an embodiment according to the present invention.
Fig. 2 shows a link structure for supporting a vibration frame 3 vibratorily, wherein Fig. 2(a) is a side view thereof and Fig. 2(b) is a cross sectional view taken on line B-B of Fig. 2(a).

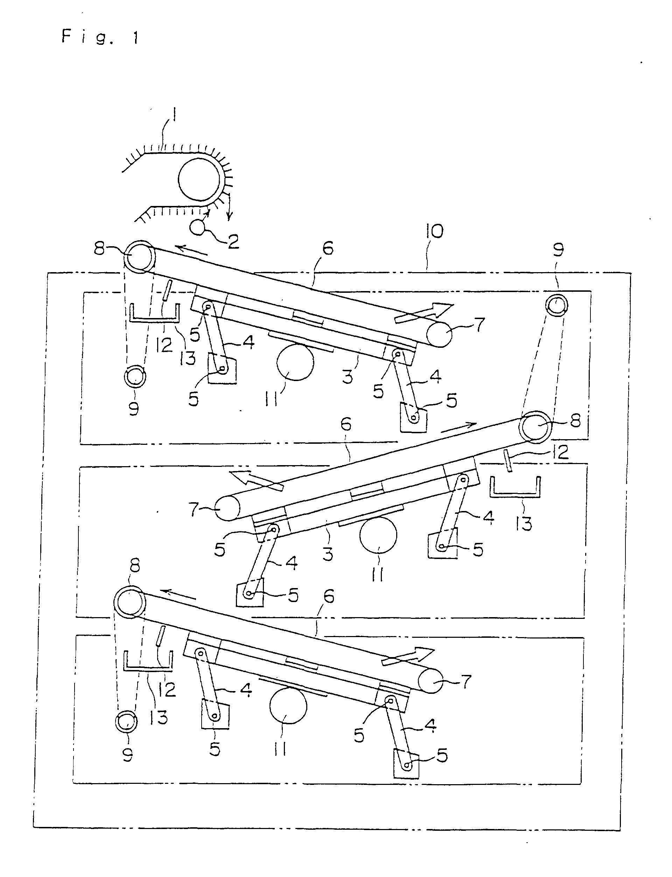

Herebelow, description will be made of a sprouting beans refining apparatus according to a preferred embodiment of the present invention with reference to Fig. 1. Fig. 1 is an entire constructional side view of a sprouting beans refining apparatus according to the present invention. In Fig. 1, numeral 1 designates a raking-up conveyor, which rakes up sprouting beans from a sprouting beans storage tank (not shown) provided below the raking-up conveyor 1. The raking-up conveyor 1 comprises an endless flat belt on which needle-like projections are planted. Numeral 2 designates an air blowing device, from which air is blown for separating the sprouting beans attached to the needle-like projections of the raking-up conveyor 1. Below the raking-up conveyor 1, there is provided a vibration frame 3 which is supported pivotably around a fulcrum 5 by a link 4.

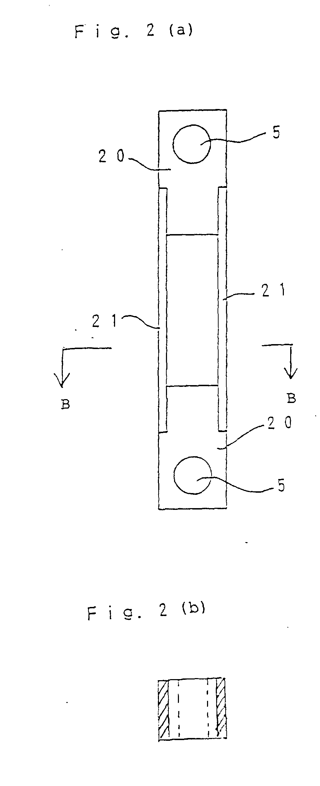

Fig. 2 shows a link structure for supporting a vibration frame 3 vibratorily, wherein Fig. 2(a) is a side view thereof and Fig. 2(b) is a cross sectional view taken on line B-B of Fig. 2(a). As shown in Figs. 2(a) and (b), the link 4 is an elastic or flexible member constructed such that two plate springs 21 have a holder 20 at one end thereof and another holder 20 at the other end thereof and these two holders 20 are supported by the fulcrums 5, respectively. The vibration frame 3 is arranged inclinedly about 10 degrees downwardly on the right hand side in the figure.

Two rolls 7, 8 are supported rotatably on the vibration frame 3 and a rubber-make endless flat belt 6 is wound around therebetween. The roll 8 is driven rotationally by a drive motor 9 to thereby move the endless flat belt 6 upwardly along the inclination as shown by arrow in the figure.

Below the vibration frame 3, there is provided a vibration generator 11 for vibrating the vibration frame 3. This vibration generator 11 can give vibration, for example, of frequency of 1,000 to 2,000 per minute. The vibration frame 3 is supported pivotably around the fulcrum 5 by the link 4, hence the vibration frame 3 given vibration by the vibration generator 11 moves vibratorily toward a reverse direction of a moving direction of the endless flat belt 6, as shown by white arrow in the figure. Thus, the sprouting beans on the endless flat belt 6 are sent downwardly in the reverse direction of the moving direction of the endless flat belt 6.

On the other hand, roots of the sprouting beans or other refuse matters attached to or mixed in the sprouting beans stick to an upper surface of the endless flat belt 6 having a surface wetted by water and are transferred together with the movement of the endless flat belt 6 upwardly in the reverse direction of the moving direction of the sprouting beans.

On a returning side of the endless flat belt 6, there is disposed a refuse scraper 12 in engagement with the surface of the endless flat belt 6, and below the refuse scraper 12, there is disposed a tray 13 for receiving refuses scraped off the endless flat belt 6 by the refuse scraper 12.

As shown in Fig. 1, below the vibration frame 3 described above, there are provided further vibration frames 3, in two stages, each stage having same structure as that described above comprising the endless flat belt 6, the vibration generator 11, etc. and being supported pivotably around the fulcrum 5 by the link 4. All of these vibration frames 3, etc. are supported by a frame 10 but detailed illustration of the structure thereof is omitted for easily understandable simplicity of the figure.

It is to be noted that although the vibration frames 3 are provided in three stages in the illustration, the vibration frames 3 may be provided in two stages or even in four or more stages for better refining, as the case may be. Also, in place of the vibration generator 11 of rotary type which is used for vibrating the vibration frames 3 in the illustration, a vibration generator of eccentric cam type or piston crank type, or a mechanism for throwing up inclinedly the sprouting beans using spring and lever, may be employed.

According to the apparatus as described above, the sprouting beans can be refined in the following way.

The sprouting beans to be refined are raked up by the raking-up conveyor 1 from a storage tank (not shown) while they are disentangled of lumps of sprouting beans and then are caused to fall down on the endless flat belt 6 above the vibration frame 3.

The vibration frame 3 is given vibration by the vibration generator 11, hence, as mentioned above, the sprouting beans springing on the endless flat belt 6 are moved gradually downwardly along the inclination of the endless flat belt 6.

On the other hand, refuse matters of roots, hulls, trashes and the like contained in the sprouting beans are transferred upwardly together with the endless flat belt 6 as they attach to the surface of the endless flat belt 6 and then are scraped by the refuse scraper 8 to be discharged into the tray 13.

The sprouting beans so refined are caused to fall down on the endless flat belt 6 of lower stage from the right hand end in the figure of the endless flat belt 6 to be further refined with the refuse matters still remaining in the sprouting beans being removed and then are taken out as clean sprouting beans. Further refinement may be made, as the case may be, with the endless flat belt 6 of further lower stage being used.

In the above, the present invention has been described concretely with respect to the embodiment illustrated in the figure but the present invention is not limited thereto but, needless to mention, may be added with various modifications thereof. For example, although the inclination of the endless flat belt 6 has been described as about 10 degrees in the embodiment, said inclination may be set in an appropriately selected angle according to types and shapes of the sprouting beans to be processed.

As shown the vibration frames 3 are disposed zigzag in the form of upward and downward directional lamination in this embodiment.

As mentioned above, according to the sprouting beans refining apparatus of the present invention, the sprouting beans can be refined without using water which aggravates freshness preservation of the sprouting beans.

Especially, the apparatus of the present invention is constructed uniquely such that the endless flat belt is supported by the vibration frame so as to be inclined upwardly in the moving direction thereof and roots, trashes and the like attaching to the surface of the endless flat belt are transferred upwardly together with the endless flat belt, while the sprouting beans on the endless flat belt are given vibration so as to be sent downwardly, thereby such a highly efficient refinement of the sprouting beans as has been never seen in the prior art is realized.

## Claims

1. A sprouting beans refining apparatus, comprising
- a vibration frame (3) for supporting an endless flat belt (6), inclined so as to make a moving direction thereof upward;
- a drive unit (9) for driving said endless flat belt (6) toward said moving direction;
- a vibration generator (11) for giving said vibration frame (3) vibration in a reverse direction of said moving direction of the endless flat belt (6) so that sprouting beans on said endless flat belt (6) are sent toward said reverse direction of the moving direction of the belt (6); and
- a scraper (12) disposed opposingly to said endless flat belt (6) for removing attachments to said belt (6),
**characterized in that** at least two vibration frames (3) each for supporting an endless belt (6) including a drive unit (9), a vibration generator (11) and a scraper (12) are disposed zigzag in the form of upward and downward directional lamination and that the surface of each endless belt (6) is easily wettable by water.

## Patentansprüche

1. Pflanzensprossen-Säuberungsvorrichtung, welche folgendes aufweist:
- einen Schwingrahmen (3) zum Lagern eines endlosen, ebenen Bandes (6), welches derart geneigt ist, daß man eine nach oben gerichtete Bewegungsrichtung erhält;
- eine Antriebseinheit (9) zum Antreiben des endlosen, ebenen Bandes (6) in Bewegungsrichtung;
- einen Schwlngungsgenerator (11), welcher dem Schwingrahmen (3) eine Schwingbewegung in Gegenrichtung zur Bewegungsrichtung des endlosen, ebenen Bandes (6) derart erteilt, daß die Pflanzensprossen auf dem endlosen, ebenen Band (6) in eine Gegenrichtung zur Bewegungsrlchtung des Bandes (6) gefördert werden; und
- einen Abstreifer (12), welcher dem endlosen, ebenen Band (6) gegenüberliegend zur Entfemung von Anhaftungen an dem Band (6) angeordnet ist,
**dadurch gekennzeichnet, daß** wenigstens zwei Schwingrahmen (3) jewells zur Lagerung des endlosen Bandes (6) einschließlich einer Antriebseinheit (9), eines Schwingungsgenerators (11) und eines Abstreifers (12) zick-zack-förmig abwechselnd nach oben und unten fördernd angeordnet sind, und daß die Oberfläche jedes endlosen Bandes (6) leicht mittels Wasser benetzbar ist.

## Revendications

1. Dispositif de raffinage de haricots, comportant
- un châssis vibratoire (3) destiné à supporter une courroie plate sans fin (6), incliné de manière à définir une direction de mouvement de ladite courroie orientée vers le haut ;
- une unité d'entraînement (9) destinée à entraîner en mouvement ladite courroie plate sans fin (6) dans ladite direction de mouvement ;
- un générateur de vibrations (11) destiné à transmettre audit châssis vibratoire (3) des vibrations dans une direction inverse à ladite direction de mouvement de ladite courroie plate sans fin (6) de sorte que des haricots présents sur ladite courroie plate sans fin (6) soient envoyés vers ladite direction inverse à la direction de mouvement de la courroie (6); et
- un racloir (12) disposé à l'opposé de ladite courroie plate sans fin (6) destiné à éliminer des matières attachées à ladite courroie (6),
**caractérisé en ce qu'**au moins deux châssis vibratoires (3), chacun destiné à supporter une courroie sans fin (6) et incluant une unité d'entraînement (9), un générateur de vibrations (11) et un racloir (12). sont disposés en zigzag selon des directions de laminage orientées vers le haut et vers le bas, et **en ce que** la surface de chaque courroie sans fin (6) peut aisément être rendue humide en utilisant de l'eau.
